# EUROPEAN PATENT APPLICATION

(11) **EP 4 513 916 A1**
(43) Date of publication of application: **26.02.2025**
(21) Application number: 22938535.6
(22) Date of filing: 21.04.2022
(51) Int. Cl.: H04W 8/22, H04W 16/28, H04W 72/0457, H04W 88/02

(54) **TERMINAL AND COMMUNICATION METHOD**

(71) Applicant: NTT DOCOMO, INC., Tokyo 100-6150 (JP)
(72) Inventor: NAKAMURA, Takuma, Tokyo 100-6150 (JP); OHARA, Tomoya, Tokyo 100-6150 (JP); HARADA, Hiroki, Tokyo 100-6150 (JP)
(74) Representative: Hoffmann Eitle
(86) International application number: PCT/JP2022/018495
(87) International publication number: WO 2023/203735

(57) **Abstract**

A terminal includes: a transmitting unit configured to transmit, to a base station, a capability related to a band to be connected to an antenna that does not switch between bands of a transmission chain; a reception unit configured to receive, from the base station, a notification related to the antenna that does not switch between the bands of the transmission chain; and a control unit configured to determine a transmission antenna port corresponding to the transmission chain, wherein the transmitting unit transmits an uplink by using the transmission chain and the transmission antenna port, and the control unit determines, based on the notification related to the antenna that does not switch between the bands of the transmission chain, the band to be connected to the antenna that does not switch between the bands of the transmission chain.

## Description

### Technical Field

The present invention relates to a terminal and a communication method in a wireless communication system.

### Background Art

In new radio (NR) (also referred to as "5G") which is a succeeding system of long term evolution (LTE), a study has been conducted on a technology that satisfies, as requirement conditions for the technology, a large-capacity system, a high-speed data transmission speed, a low delay, simultaneous connection of a large number of terminals, a low cost, power saving, and the like (for example, Non Patent Literature 1).

Furthermore, a study on 6G has been started as a next-generation wireless communication system of 5G, and it is expected to realize wireless quality exceeding 5G. For example, in 6G, a study has been conducted to realize further increase in capacity, use of a new frequency band, further reduction in delay, further high reliability, further reduction in power consumption, extension of coverage in new areas (high altitudes, sea, and outer space) by a non-terrestrial network, and the like (for example, Non Patent Literature 2).

### Citation List

### Non Patent Literature

Non Patent Literature 1: 3GPP TS 38.300 V16.8.0 (2021-12)
Non Patent Literature 2: 3GPP TR 38.821 V16.1.0 (2021-05)

### Summary of Invention

### Technical Problem

A study has been conducted to enhance uplink transmission in multi-carrier. For example, a study has been conducted on an operation in which a terminal that simultaneously supports up to two types of transmission dynamically switches a band for execution of uplink transmission over three or four bands. Here, an antenna that does not perform switching is fixed to any band. However, when the number of candidate bands increases, it has been unclear which band the antenna is to be fixed to.

The present invention has been made in view of the above-described points, and an object thereof is to determine a band for execution of uplink transmission in an antenna that does not perform band switching in a wireless communication system.

### Solution to Problem

According to the disclosed technology, there is provided a terminal including: a transmitting unit configured to transmit, to a base station, a capability related to a band to be connected to an antenna that does not switch between bands of a transmission chain; a reception unit configured to receive, from the base station, a notification related to the antenna that does not switch between the bands of the transmission chain; and a control unit configured to determine a transmission antenna port corresponding to the transmission chain, wherein the transmitting unit transmits an uplink by using the transmission chain and the transmission antenna port, and the control unit determines, based on the notification related to the antenna that does not switch between the bands of the transmission chain, the band to be connected to the antenna that does not switch between the bands of the transmission chain.

### Advantageous Effects of Invention

According to the disclosed technology, in a wireless communication system, it is possible to determine a band for execution of uplink transmission in an antenna that does not perform band switching.

### Brief Description of Drawings

[Fig. 1] Fig. 1 is a diagram illustrating a configuration example (1) of a wireless communication system.
[Fig. 2] Fig. 2 is a diagram illustrating a configuration example (2) of the wireless communication system.
[Fig. 3] Fig. 3 is a diagram illustrating an example (1) of transmission switching.
[Fig. 4] Fig. 4 is a diagram illustrating an example (2) of the transmission switching.
[Fig. 5] Fig. 5 is a diagram illustrating an example (3) of the transmission switching.
[Fig. 6] Fig. 6 is a diagram illustrating an example (4) of the transmission switching.
[Fig. 7] Fig. 7 is a diagram illustrating an example (1) of transmission switching in which some bands are fixed.
[Fig. 8] Fig. 8 is a sequence diagram illustrating an example of UL transmission according to an embodiment of the present invention.
[Fig. 9] Fig. 9 is a diagram illustrating a mapping example (1) of a Tx chain and a UL transmission antenna port according to the embodiment of the present invention.
[Fig. 10] Fig. 10 is a diagram illustrating a mapping example (2) of the Tx chain and the UL transmission antenna port according to the embodiment of the present invention.
[Fig. 11] Fig. 11 is a diagram illustrating a mapping example (3) of the Tx chain and the UL transmission antenna port according to the embodiment of the present invention.
[Fig. 12] Fig. 12 is a diagram illustrating a mapping example (4) of the Tx chain and the UL transmission antenna port according to the embodiment of the present invention.
[Fig. 13] Fig. 13 is a diagram illustrating an example (2) of the transmission switching in which some bands are fixed.
[Fig. 14] Fig. 14 is a diagram illustrating a mapping example (5) of the Tx chain and the UL transmission antenna port according to the embodiment of the present invention.
[Fig. 15] Fig. 15 is a diagram illustrating a mapping example (6) of the Tx chain and the UL transmission antenna port according to the embodiment of the present invention.
[Fig. 16] Fig. 16 is a diagram illustrating a mapping example (7) of the Tx chain and the UL transmission antenna port according to the embodiment of the present invention.
[Fig. 17] Fig. 17 is a diagram illustrating a mapping example (8) of the Tx chain and the UL transmission antenna port according to the embodiment of the present invention.
[Fig. 18] Fig. 18 is a diagram illustrating an example of a functional configuration of a base station 10 according to the embodiment of the present invention.
[Fig. 19] Fig. 19 is a diagram illustrating an example of a functional configuration of a terminal 20 according to the embodiment of the present invention.
[Fig. 20] Fig. 20 is a diagram illustrating an example of a hardware configuration of the base station 10 or the terminal 20 according to the embodiment of the present invention.
[Fig. 21] Fig. 21 is a diagram illustrating an example of a configuration of a vehicle 2001 according to the embodiment of the present invention.

### Description of Embodiments

Hereinafter, an embodiment of the present invention will be described with reference to the drawings. It is noted that the embodiment described below is an example, and the embodiment to which the present invention is applied is not limited to the following embodiment.

In the operation of a wireless communication system of the embodiment of the present invention, an existing technology is appropriately used. However, the existing technology is, for example, existing LTE, but is not limited to the existing LTE. In addition, the term "LTE" used in the present specification has a broad meaning including LTE-Advanced and LTE-Advanced or later systems (for example, NR), unless otherwise specified.

Further, in the embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and similar signals, functions, and the like may be referred to by other names. In addition, the above-described terms in NR correspond to NR-SS, NR-PSS, NR-SSS, NR-PBCH, NR-PRACH, and the like. However, even a signal used for NR is not necessarily specified as "NR-".

In the embodiment of the present invention, a duplex system may be a time division duplex (TDD) system, a frequency division duplex (FDD) system, or other (for example, flexible duplex or the like) systems.

In addition, in the embodiment of the present invention, a description indicating that a radio parameter or the like is "configured" may mean that a predetermined value is pre-configured, or may mean that a radio parameter notified from a base station 10 or a terminal 20 is configured.

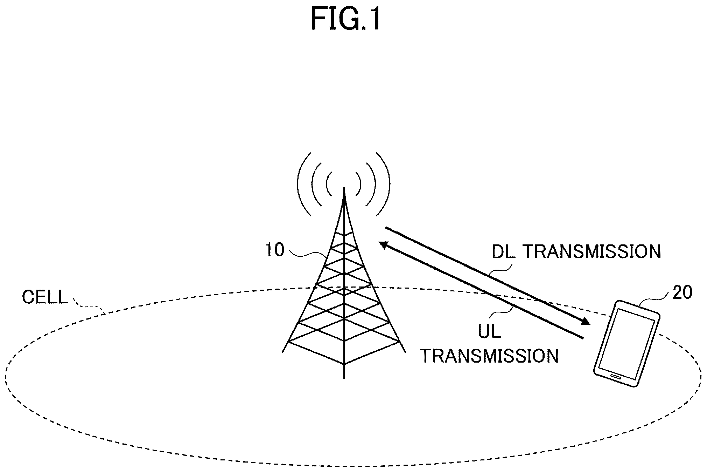

Fig. 1 is a diagram illustrating a configuration example (1) of a wireless communication system according to the embodiment of the present invention. As illustrated in Fig. 1, the wireless communication system according to the embodiment of the present invention includes the base station 10 and the terminal 20. Although one base station and one terminal are illustrated in Fig. 1, this is an example, and a plurality of base stations 10 and a plurality of terminals 20 may be provided.

The base station 10 is a communication device that provides one or more cells and performs wireless communication with the terminal 20. Physical resources of a radio signal are defined in a time domain and a frequency domain, the time domain may be defined by the number of orthogonal frequency division multiplexing (OFDM) symbols, and the frequency domain may be defined by the number of sub-carriers or the number of resource blocks. The base station 10 transmits a synchronization signal and system information to the terminal 20. The synchronization signal is, for example, NR-PSS and NR-SSS. The system information is transmitted through, for example, NR-PBCH and is also referred to as notification information. The synchronization signal and the system information may be referred to as an SSB (SS/PBCH block). As illustrated in Fig. 1, the base station 10 transmits a control signal or data to the terminal 20 through a downlink (DL) and receives a control signal or data from the terminal 20 through an uplink (UL). Both the base station 10 and the terminal 20 can transmit and receive a signal by performing beamforming. In addition, both the base station 10 and the terminal 20 can apply communication based on multiple input multiple output (MIMO) to the DL or the UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (Primary SCG Cell, PSCell) of another base station 10 by dual connectivity (DC).

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by the wireless communication system by receiving a control signal or data from the base station 10 using the DL and transmitting the control signal or the data to the base station 10 using the UL. In addition, the terminal 20 receives various reference signals transmitted from the base station 10 and measures propagation path quality based on the reception result of the reference signals.

The terminal 20 can perform carrier aggregation for bundling a plurality of cells (a plurality of component carriers (CCs)) and performing communication with the base station 10. In the carrier aggregation, one primary cell (PCell) and one or more secondary cells (SCells) are used. In addition, a PUCCH-SCell having a PUCCH may be used.

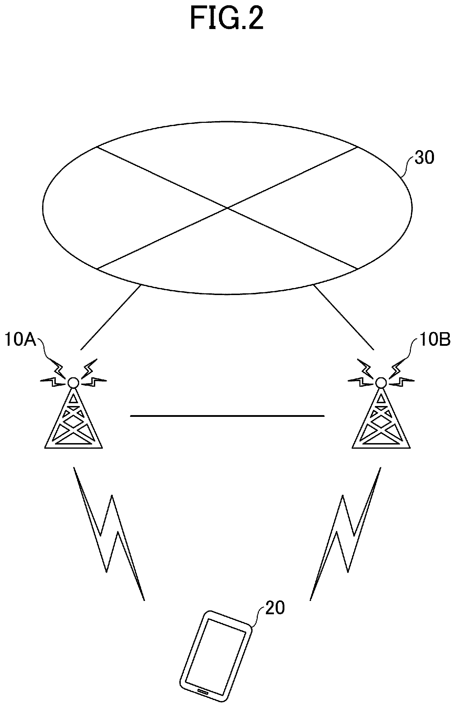

Fig. 2 is a diagram illustrating an example (2) of the wireless communication system according to the embodiment of the present invention. Fig. 2 illustrates a configuration example of the wireless communication system in a case where dual connectivity (DC) is executed. As illustrated in Fig. 2, a base station 10A serving as a master node (MN) and a base station 10B serving as a secondary node (SN) are provided. Each of the base station 10A and the base station 10B is connected to a core network. The terminal 20 can communicate with both the base station 10A and the base station 10B.

A cell group provided by the base station 10A, which is the MN, is referred to as a master cell group (MCG), and a cell group provided by the base station 10B, which is the SN, is referred to as a secondary cell group (SCG). In addition, in the DC, the MCG includes one PCell and one or more SCells, and the SCG includes one primary SCG Cell (PSCell) and one or more SCells.

The processing operation in the present embodiment may be executed in the system configuration illustrated in Fig. 1, may be executed in the system configuration illustrated in Fig. 2, or may be executed in a system configuration other than the above-described system configurations.

Here, transmission switching (Tx switching) has been studied in 3GPP Releases 16 and 17.

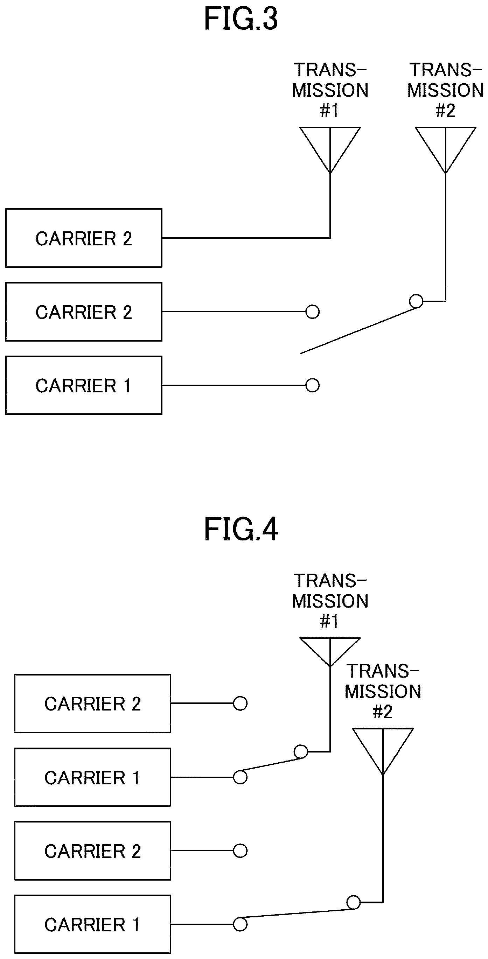

Fig. 3 is a diagram illustrating an example (1) of transmission switching. Fig. 3 illustrates an example of transmission switching in a supplementary uplink (SUL) and the CA in 3GPP Release 16. As illustrated in Fig. 3, there is one switching antenna, and switching between 2 CCs is stipulated.

Fig. 4 is a diagram illustrating an example (2) of the transmission switching. Fig. 4 illustrates an example of the transmission switching in the SUL and the CA in 3GPP Release 17. As illustrated in Fig. 4, there are two switching antennas, and switching between 2 CCs or 3 CCs (here, 2 CCs are in the same band) is stipulated.

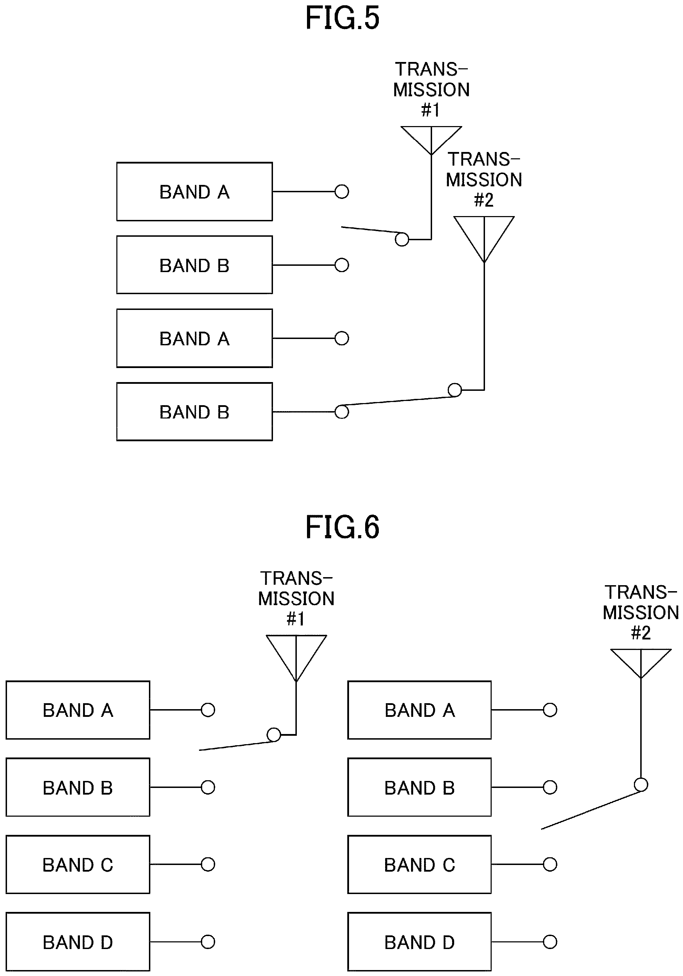

Fig. 5 is a diagram illustrating an example (3) of the transmission switching. Fig. 5 illustrates an example of transmission switching between bands in 3GPP Release 17. As illustrated in Fig. 5, there are two switching antennas, and switching between two bands is stipulated.

Fig. 6 is a diagram illustrating an example (4) of the transmission switching. Fig. 6 illustrates an example of transmission switching between three or four band CCs with two switching antennas, which is intended to be studied in 3GPP Release 18.

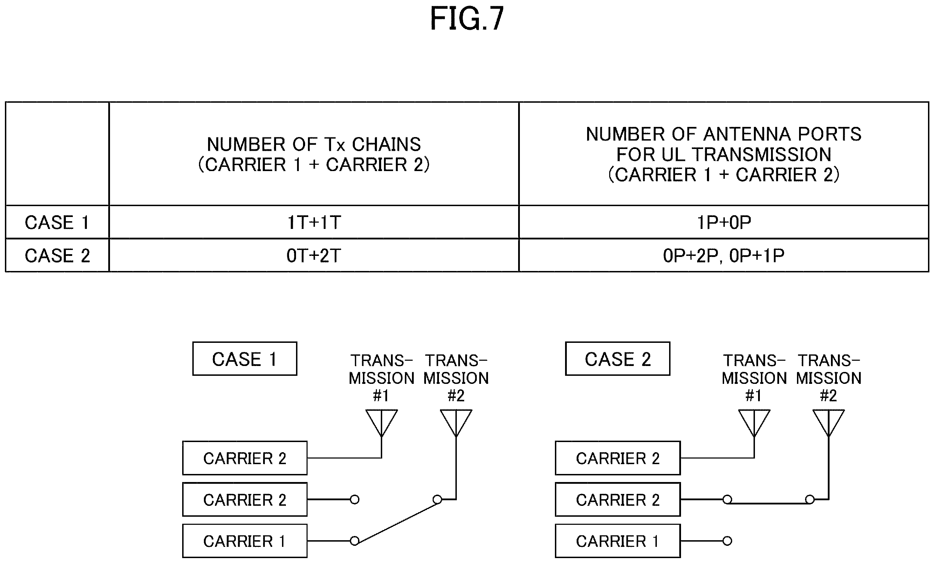

Fig. 7 is a diagram illustrating an example (1) of transmission switching in which some bands are fixed. In 1Tx-2Tx switching of 3GPP Release 16 or 17, an antenna that does not switch between bands (or carriers) to be connected is fixed to any band. Fig. 7 illustrates an example of a UL-CA option 1 in 3GPP Release 16. As illustrated in Fig. 7, in both a case 1 and a case 2, transmission #1 is always fixedly connected to a carrier 2.

As illustrated in Fig. 7, in the case 1, when the number of Tx chains is one in a carrier 1 and one in the carrier 2, the number of UL transmission ports corresponds to one in the carrier 1. In the case 2, when the number of Tx chains is two in the carrier 2, the number of UL transmission ports corresponds to two or one in the carrier 2.

However, since the number of candidate bands is increased to three or four in 3GPP Release 18, it is unclear which band is to be fixed for use.

Therefore, in the terminal 20 that executes transmission switching, a band to be connected to an antenna that does not perform antenna switching may be specified in advance or may be notified from the base station 10.

In the following example, the number of CCs per band is assumed to be 1 CC, but the present invention is not limited thereto. For example, when four bands are used, the following examples 1) to 4) may be assumed. It is noted that a UL transmission port and a UL transmission antenna port may be replaceable with each other.
1) A total of 4 CCs is obtained in a case where 1 CC is set for each band.
2) When 2 CCs (intra-band) are present for each band, a total of 8 CCs is obtained in a case where 2 CCs are in all bands.
3) When 2 CCs (intra-band) are present for each band, a total of 5 CCs, 6 CCs, or 7 CCs is obtained in a case where 1 CC is in some bands.
4) It may be assumed that X CCs (intra-band) are present for each band. X may be greater than 2.

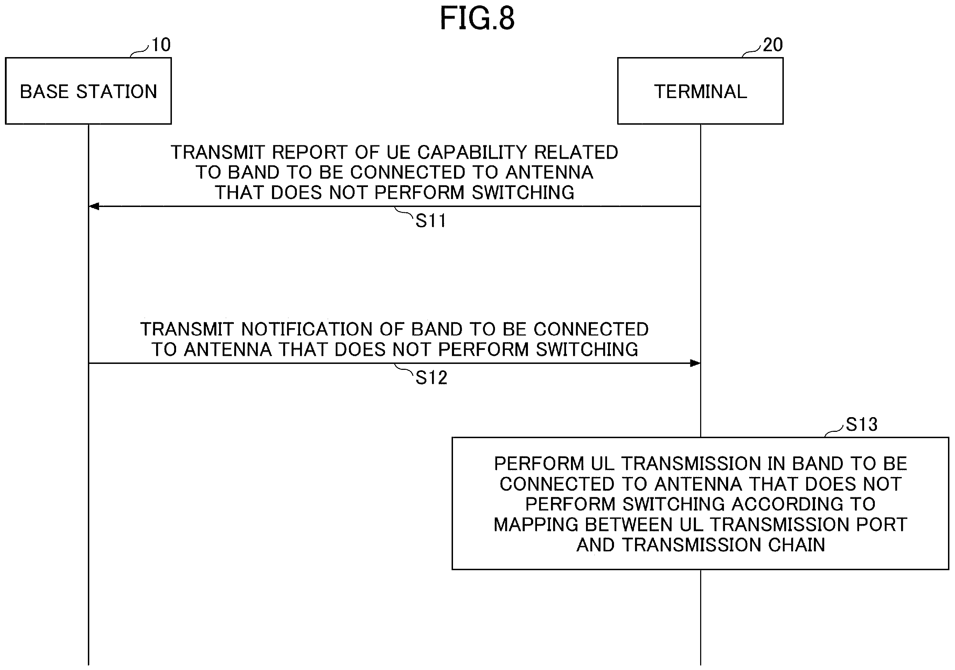

Fig. 8 is a sequence diagram illustrating an example of UL transmission according to the embodiment of the present invention. In step S11, the terminal 20 may transmit, to the base station 10, a report of a UE capability related to a band to be connected to an antenna that does not perform switching.

The UE capability may be, for example, 1) or 2) described below.
1) The UE capability may be a capability indicating whether each band supports connection to the antenna that does not perform switching.
2) The UE capability may be a capability that include information indicating a band that supports connection to the antenna that does not perform switching.

It is noted that the terminal 20 may assume that a band for which the UE capability is not notified from the terminal 20 to the base station 10 is not a band to be connected to the antenna that does not perform switching.

In subsequent step S12, the base station 10 may transmit, to the terminal 20, a notification of the band to be connected to the antenna that does not perform switching. Furthermore, the notification may be provided by any one or a combination of SIB, RRC signaling, MAC-CE, and DCI.

In subsequent step S13, the terminal 20 performs UL transmission at least in the band to be connected to the antenna that does not perform switching according to mapping between a UL transmission port and a transmission chain.

Here, the "case" indicates the mapping between the UL transmission port and the Tx chain.

It is noted that steps S11 and S12 are not necessarily executed, and the terminal 20 may execute a pre-stipulated operation or a preset operation in step S13.

An example of mapping between a Tx chain and a UL transmission antenna port in 1Tx-2Tx switching for SUL and a UL-CA option 1 as illustrated in Fig. 7 will be described below. For each band to be connected to the antenna that does not perform switching, which is determined by the above-described operation, the terminal 20 may perform the UL transmission according to mapping to be described below.

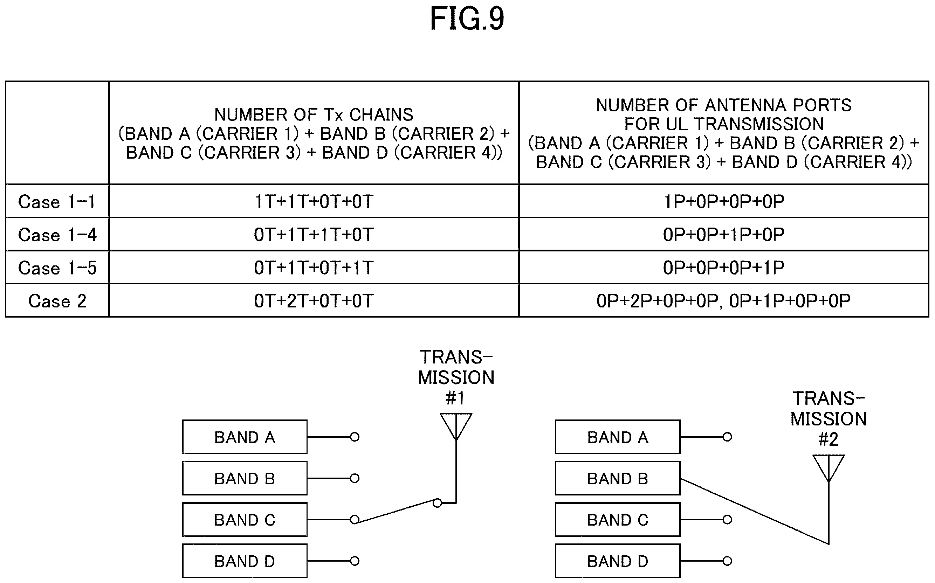

Fig. 9 is a diagram illustrating a mapping example (1) of the Tx chain and the UL transmission antenna port according to the embodiment of the present invention. Fig. 9 is a diagram illustrating switching of 1Tx-2Tx-1Tx-1Tx, and is an example in which the number of bands is four and transmission #2 is fixed to the band B. As illustrated in Fig 9, the terminal 20 or the base station 10 may assume that the Tx chain and the antenna port of the UL transmission are mapped.

As illustrated in Fig. 9, in a case 1-1, when the number of Tx chains is one in a band A and one in a band B, the number of UL transmission ports corresponds to one in the band A. In a case 1-4, when the number of Tx chains is one in the band B and one in a band C, the number of UL transmission ports corresponds to one in the band C. In a case 1-5, when the number of Tx chains is one in the band B and one in a band D, the number of UL transmission ports corresponds to one in the band D. In a case 2, when the number of Tx chains is two in the band B, the number of UL transmission ports corresponds to two or one in the band B.

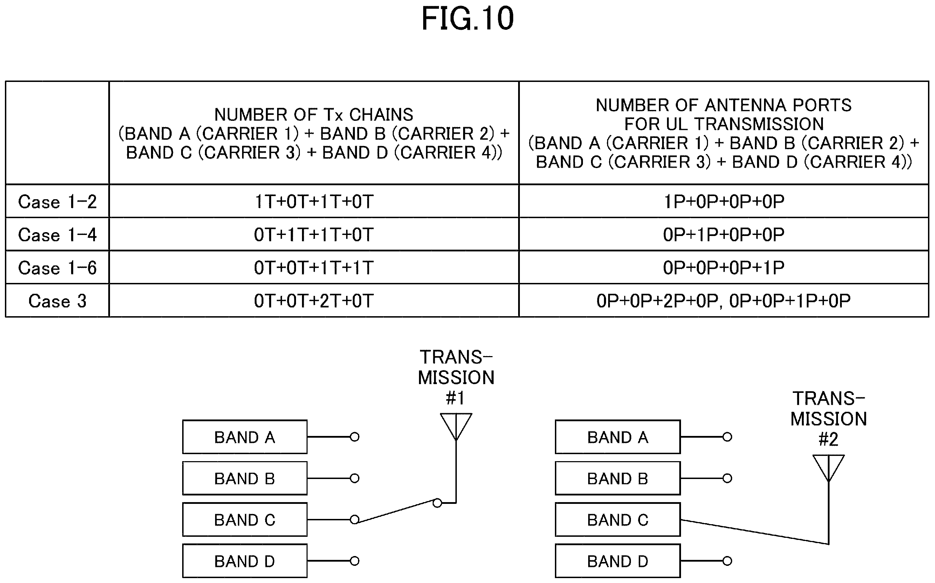

Fig. 10 is a diagram illustrating a mapping example (2) of the Tx chain and the UL transmission antenna port according to the embodiment of the present invention. Fig. 10 is a diagram illustrating switching of 1Tx-1Tx-2Tx-1Tx, and is an example in which the number of bands is four and transmission #2 is fixed to the band C. As illustrated in Fig. 10, the terminal 20 or the base station 10 may assume that the Tx chain and the antenna port of the UL transmission are mapped.

As illustrated in Fig. 10, in a case 1-2, when the number of Tx chains is one in the band A and one in the band C, the number of UL transmission ports corresponds to one in the band A. In a case 1-4, when the number of Tx chains is one in the band B and one in the band C, the number of UL transmission ports corresponds to one in the band B. In a case 1-6, when the number of Tx chains is one in the band C and one in the band D, the number of UL transmission ports is one in the band D. In a case 3, when the number of Tx chains is two in the band C, the number of UL transmission ports corresponds to two or one in the band C.

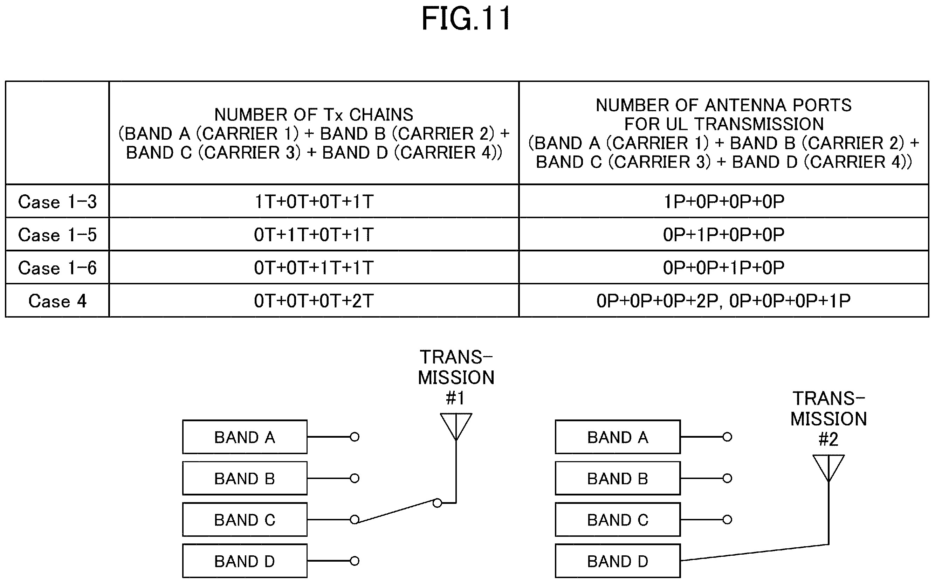

Fig. 11 is a diagram illustrating a mapping example (3) of the Tx chain and the UL transmission antenna port in the embodiment of the present invention. Fig. 11 is a diagram illustrating switching of 1Tx-1Tx-1Tx-2Tx, and is an example in which the number of bands is four and the transmission #2 is fixed to the band D. As illustrated in Fig. 11, the terminal 20 or the base station 10 may assume that the Tx chain and the antenna port of the UL transmission are mapped.

As illustrated in Fig. 11, in a case 1-3, when the number of Tx chains is one in the band A and one in the band D, the number of UL transmission ports corresponds to one in the band A. In a case 1-5, when the number of Tx chains is one in the band B and one in the band D, the number of UL transmission ports corresponds to one in the band B. In a case 1-6, when the number of Tx chains is one in the band C and one in the band D, the number of UL transmission ports is one in the band C. In a case 4, when the number of Tx chains is two in the band D, the number of UL transmission ports corresponds to two or one in the band D.

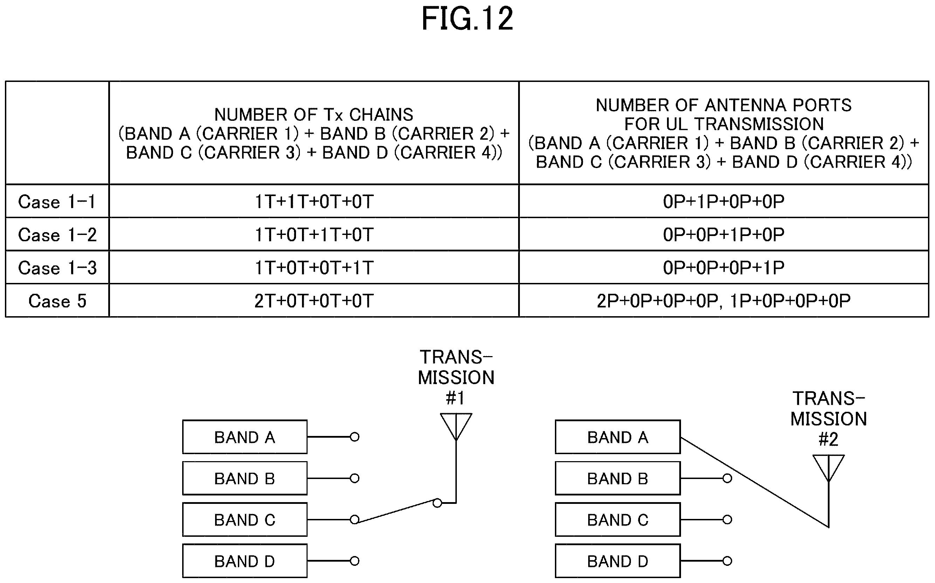

Fig. 12 is a diagram illustrating a mapping example (4) of the Tx chain and the UL transmission antenna port in the embodiment of the present invention. Fig. 11 is a diagram illustrating switching of 2Tx-1Tx-1Tx-1Tx, and is an example in which the number of bands is four and the transmission #2 is fixed to the band D. As illustrated in Fig. 12, the terminal 20 or the base station 10 may assume that the Tx chain and the antenna port of the UL transmission are mapped.

As illustrated in Fig. 12, in a case 1-1, when the number of Tx chains is one in the band A and one in the band B, the number of UL transmission ports corresponds to one in the band B. In a case 1-2, when the number of Tx chains is one in the band A and one in the band C, the number of UL transmission ports corresponds to one in the band C. In a case 1-3, when the number of Tx chains is one in the band A and one in the band D, the number of UL transmission ports corresponds to one in the band D. In a case 4, when the number of Tx chains is two in the band A, the number of UL transmission ports corresponds to two or one in the band A.

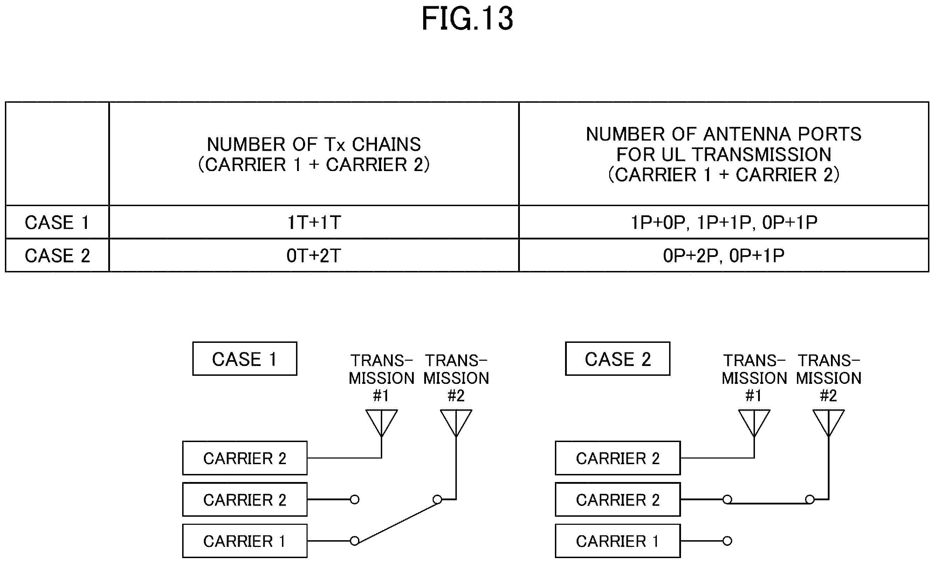

Fig. 13 is a diagram illustrating an example (2) of transmission switching in which some bands are fixed. An example of mapping between a Tx chain and a UL transmission antenna port in 1Tx-2Tx switching for SUL and a UL-CA option 2 as illustrated in Fig. 13 will be described below. For each band to be connected to the antenna that does not perform switching, which is determined by the above-described operation, the terminal 20 may perform the UL transmission according to mapping to be described below.

It is noted that, as illustrated in Fig. 13, in a case 1, when the number of Tx chains is one in the carrier 1 and one in the carrier 2, the number of UL transmission ports corresponds to one in the carrier 1, one in the carrier 1 and one in the carrier 2, or one in the carrier 2. In a case 2, when the number of Tx chains is two in the carrier 2, the number of UL transmission ports corresponds to two in the carrier 1 or one in the carrier 2.

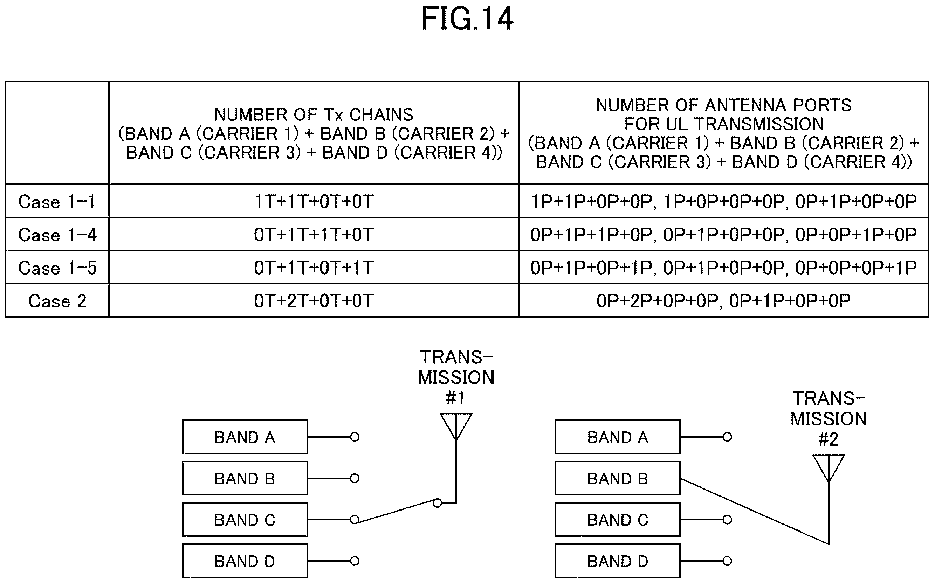

Fig. 14 is a diagram illustrating a mapping example (5) of the Tx chain and the UL transmission antenna port in the embodiment of the present invention. Fig. 14 is a diagram illustrating switching of 1Tx-2Tx-1Tx-1Tx, and is an example in which the number of bands is four and the transmission #2 is fixed to the band B. As illustrated in Fig. 14, the terminal 20 or the base station 10 may assume that the Tx chain and the antenna port of the UL transmission are mapped.

As illustrated in Fig. 14, in a case 1-1, when the number of Tx chains is one in the band A and one in the band B, the number of UL transmission ports corresponds to one in the band A and one in the band B, or one in the band A or one in the band B. In a case 1-4, when the number of Tx chains is one in the band B and one in the band C, the number of UL transmission ports corresponds to one in the band B and one in the band C, or one in the band B or one in the band C. In a case 1-5, when the number of Tx chains is one in the band B and one in the band D, the number of UL transmission ports corresponds to one in the band B and one in the band D, or one in the band B or one in the band D. In a case 2, when the number of Tx chains is two in the band B, the number of UL transmission ports corresponds to two or one in the band B.

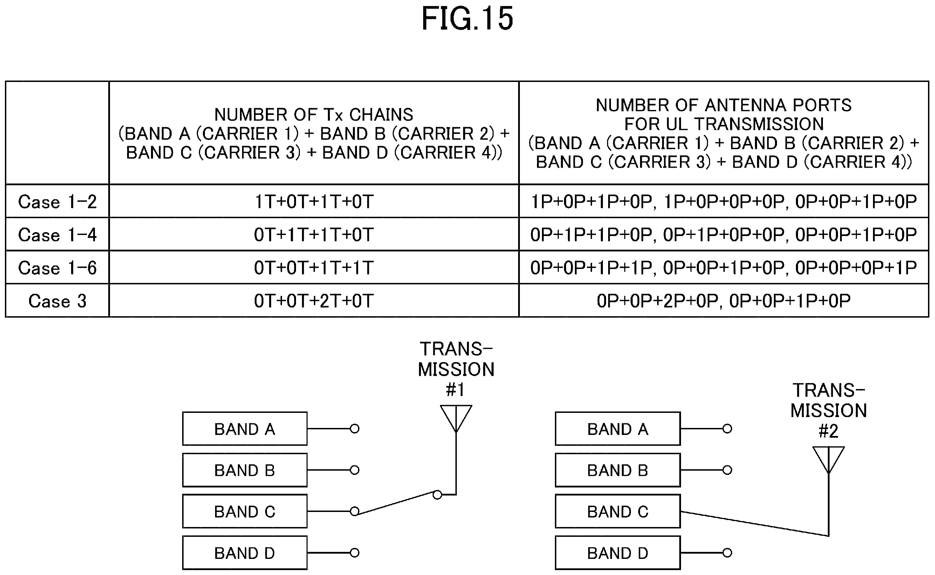

Fig. 15 is a diagram illustrating a mapping example (6) of the Tx chain and the UL transmission antenna port in the embodiment of the present invention. Fig. 15 is a diagram illustrating switching of 1Tx-1Tx-2Tx-1Tx, and is an example in which the number of bands is four and the transmission #2 is fixed to the band C. As illustrated in Fig. 15, the terminal 20 or the base station 10 may assume that the Tx chain and the antenna port of the UL transmission are mapped.

As illustrated in Fig. 15, in a case 1-2, when the number of Tx chains is one in the band A and one in the band C, the number of UL transmission ports corresponds to one in the band A and one in the band C, or one in the band A or one in the band C. In a case 1-4, when the number of Tx chains is one in the band B and one in the band C, the number of UL transmission ports corresponds to one in the band B and one in the band C, or one in the band B or one in the band C. In a case 1-6, when the number of Tx chains is one in the band C and one in the band D, the number of UL transmission ports corresponds to one in the band C and one in the band D, or one in the band C or one in the band D. In a case 3, when the number of Tx chains is two in the band C, the number of UL transmission ports corresponds to two or one in the band C.

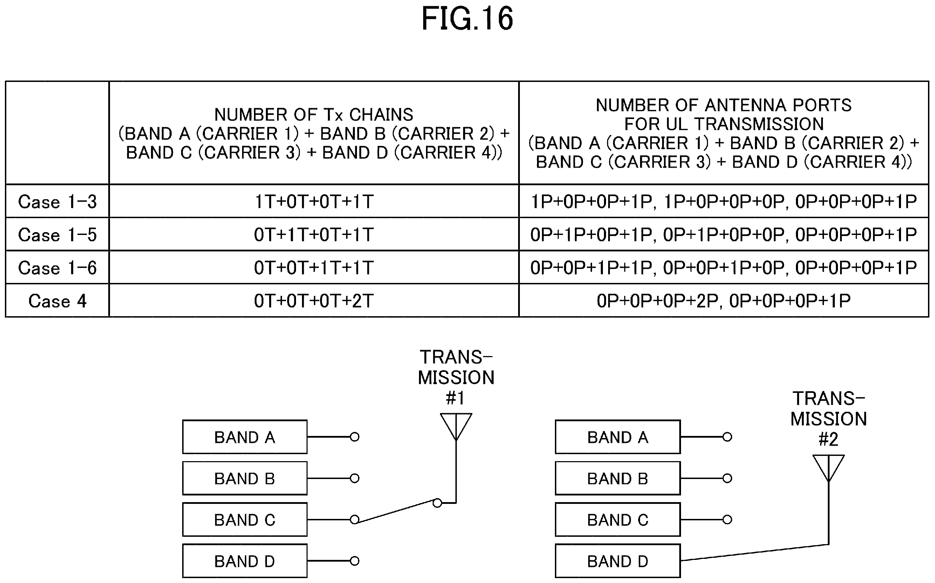

Fig. 16 is a diagram illustrating a mapping example (7) of the Tx chain and the UL transmission antenna port in the embodiment of the present invention. Fig. 16 is a diagram illustrating switching of 1Tx-1Tx-1Tx-2Tx, and is an example in which the number of bands is four and the transmission #2 is fixed to the band D. As illustrated in Fig. 16, the terminal 20 or the base station 10 may assume that the Tx chain and the antenna port of the UL transmission are mapped.

As illustrated in Fig. 16, in a case 1-3, when the number of Tx chains is one in the band A and one in the band D, the number of UL transmission ports corresponds to one in the band A and one in the band D, or one in the band A or one in the band D. In a case 1-5, when the number of Tx chains is one in the band B and one in the band D, the number of UL transmission ports corresponds to one in the band B and one in the band D, or one in the band B or one in the band D. In a case 1-6, when the number of Tx chains is one in the band C and one in the band D, the number of UL transmission ports corresponds to one in the band C and one in the band D, or one in the band C or one in the band D. In a case 4, when the number of Tx chains is two in the band D, the number of UL transmission ports corresponds to two or one in the band D.

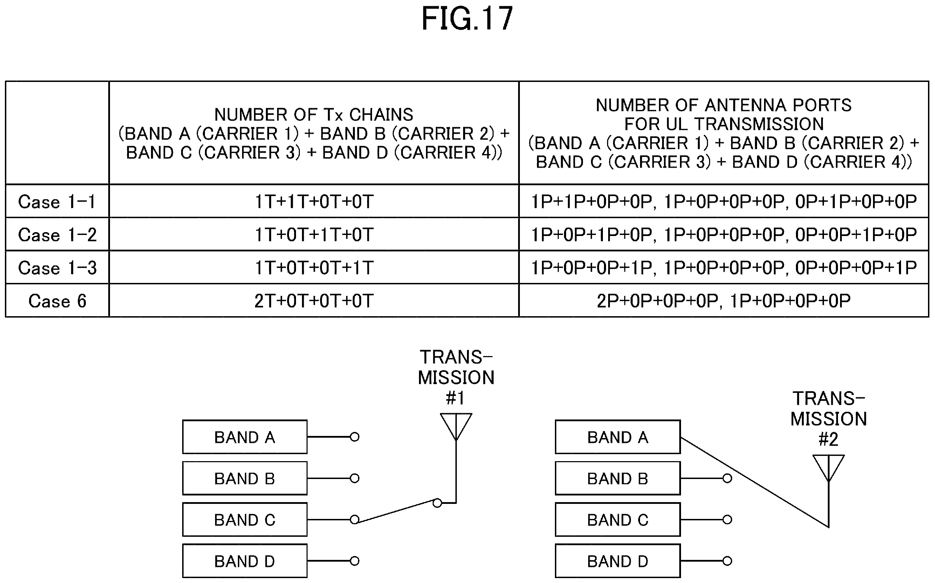

Fig. 17 is a diagram illustrating a mapping example (8) of the Tx chain and the UL transmission antenna port in the embodiment of the present invention. Fig. 17 is a diagram illustrating switching of 2Tx-1Tx-1Tx-1Tx, and is an example in which the number of bands is four and the transmission #2 is fixed to the band A. As illustrated in Fig. 17, the terminal 20 or the base station 10 may assume that the Tx chain and the antenna port of the UL transmission are mapped.

As illustrated in Fig. 17, in a case 1-1, when the number of Tx chains is one in the band A and one in the band B, the number of UL transmission ports corresponds to one in the band A and one in the band B, or one in the band A or one in the band B. In a case 1-2, when the number of Tx chains is one in the band A and one in the band C, the number of UL transmission ports corresponds to one in the band A and one in the band C, or one in the band A or one in the band C. In a case 1-3, when the number of Tx chains is one in the band A and one in the band D, the number of UL transmission ports corresponds to one in the band A and one in the band D, or one in the band A or one in the band D. In a case 4, when the number of Tx chains is two in the band D, the number of UL transmission ports corresponds to two or one in the band A.

According to the above-described embodiment, the base station 10 and the terminal 20 can perform uplink transmission based on mapping between the Tx chain and the UL transmission port, can determine a band to be transmitted by an antenna that does not switch transmission, and can execute the uplink transmission.

That is, in the wireless communication system, it is possible to determine a band for execution of uplink transmission in an antenna that does not perform band switching.

### (Device Configuration)

Next, a description will be given as to functional configuration examples of the base station 10 and the terminal 20 that execute processes and operations described above. The base station 10 and the terminal 20 include a function of implementing the above-described embodiment. However, each of the base station 10 and the terminal 20 may have only some functions in the embodiment.

### <Base Station 10>

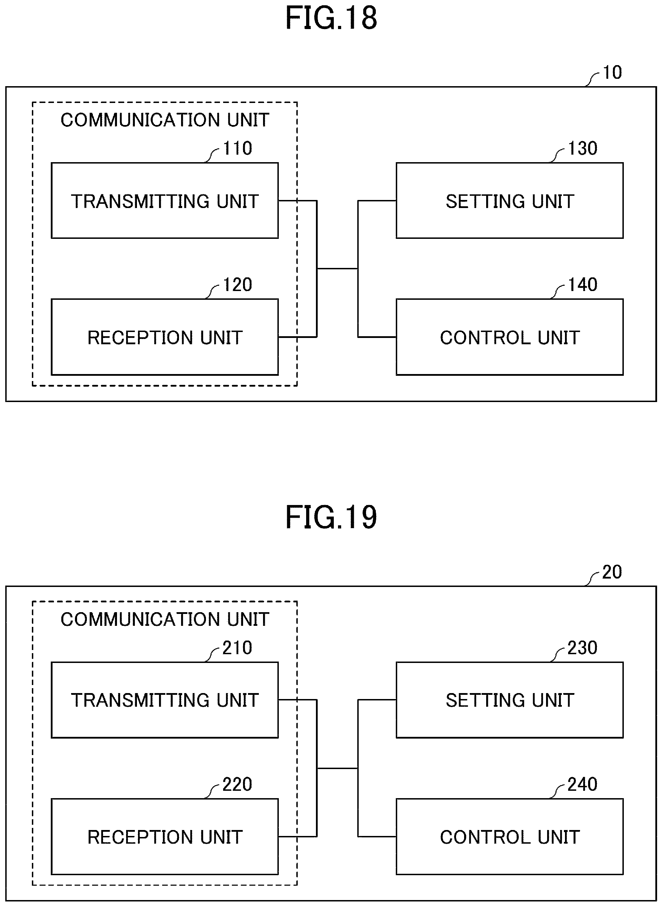

Fig. 18 is a diagram illustrating an example of a functional configuration of the base station 10 according to the embodiment of the present invention. As illustrated in Fig. 18, the base station 10 includes a transmitting unit 110, a reception unit 120, a setting unit 130, and a control unit 140. The functional configuration illustrated in Fig. 18 is merely an example. As long as the operation according to the embodiment of the present invention can be executed, the functional classification and the name of a functional unit may be freely determined.

The transmitting unit 110 has a function of generating a signal to be transmitted to the terminal 20 side and wirelessly transmitting the signal. In addition, the transmitting unit 110 transmits an inter-network node message to another network node. The reception unit 120 has a function of receiving various signals transmitted from the terminal 20 and acquiring, for example, information of a higher layer from the received signals. In addition, the transmitting unit 110 has a function of transmitting NR-PSS, NR-SSS, NR-PBCH, DL/UL control signals, and the like to the terminal 20. Further, the reception unit 120 receives the inter-network node message from another network node.

The setting unit 130 stores setting information set in advance and various types of setting information to be transmitted to the terminal 20. A content of the setting information is, for example, information related to multi-carrier scheduling.

As described in the embodiment, the control unit 140 performs control related to the multi-carrier scheduling. A functional unit related to signal transmission in the control unit 140 may be included in the transmitting unit 110, and a functional unit related to signal reception in the control unit 140 may be included in the reception unit 120.

### <Terminal 20>

Fig. 19 is a diagram illustrating an example of a functional configuration of the terminal 20 according to the embodiment of the present invention. As illustrated in Fig. 19, the terminal 20 includes a transmitting unit 210, a reception unit 220, a setting unit 230, and a control unit 240. The functional configuration illustrated in Fig. 19 is merely an example. As long as the operation according to the embodiment of the present invention can be executed, the functional classification and the name of a functional unit may be freely determined.

The transmitting unit 210 generates a transmission signal from transmission data and wirelessly transmits the transmission signal. The reception unit 220 wirelessly receives various signals and acquires a signal of a higher layer from the received signals of a physical layer. In addition, the reception unit 220 has a function of receiving NR-PSS, NR-SSS, NR-PBCH, DL/UL/SL control signals, and the like transmitted from the base station 10. Furthermore, for example, the transmitting unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as D2D communication, and the reception unit 220 receives the PSCCH, the PSSCH, the PSDCH, the PSBCH, or the like from the other terminal 20.

The setting unit 230 stores various types of setting information received from the base station 10 by the reception unit 220. The setting unit 230 also stores setting information set in advance. A content of the setting information is, for example, information related to multi-carrier scheduling.

As described in the embodiment, the control unit 240 performs control related to the multi-carrier scheduling. A functional unit related to signal transmission in the control unit 240 may be included in the transmitting unit 210, and a functional unit related to signal reception in the control unit 240 may be included in the reception unit 220.

### (Hardware Configuration)

The block diagrams (Figs. 18 and 19) used for the description of the above embodiment illustrate blocks of functional units. These functional blocks (configuration units) are realized by any combination of at least one of hardware or software. A method of implementing each functional block is not particularly limited. That is, each functional block may be realized by using one physically or logically combined device, or may be realized by directly or indirectly (for example, by using wired, wireless, or the like) connecting two or more physically or logically separated devices and using a plurality of these devices. The functional block may be realized by combining software with the one device or the plurality of devices.

The functions include, but are not limited to, determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (a configuration unit) that causes transmission to function is referred to as a transmitting unit or a transmitter. In any case, as described above, the implementation method is not particularly limited.

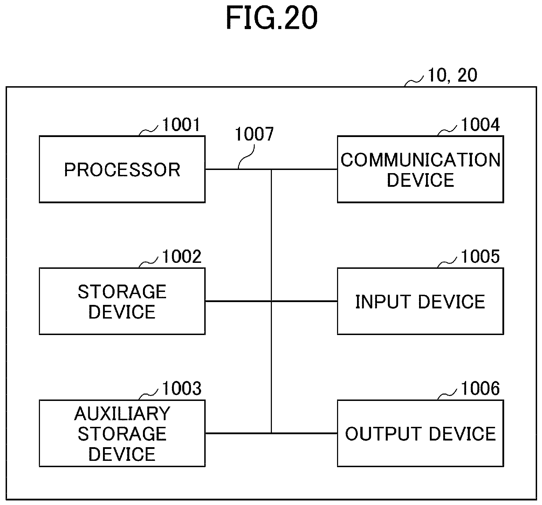

For example, the base station 10, the terminal 20, and the like in the embodiment of the present disclosure may function as a computer that performs processing of the wireless communication method of the present disclosure. Fig. 20 is a diagram illustrating an example of a hardware configuration of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configuration of the base station 10 and the terminal 20 may be configured to include one or a plurality of devices illustrated in the drawing, or may be configured without including some devices.

Each function in the base station 10 and the terminal 20 is implemented by the processor 1001 performing operation by loading predetermined software (a program) on hardware such as the processor 1001 and the storage device 1002, controlling communication by the communication device 1004, and controlling at least one of reading or writing of data in the storage device 1002 and the auxiliary storage device 1003.

The processor 1001 operates, for example, an operating system to control the entire computer. The processor 1001 may be configured with a central processing unit (CPU) including an interface with a peripheral device, a control device, an arithmetic device, a register, and the like. For example, the control unit 140, the control unit 240, and the like described above may be realized by the processor 1001.

In addition, the processor 1001 reads a program (a program code), a software module, data, or the like from at least one of the auxiliary storage device 1003 or the communication device 1004 to the storage device 1002, and executes various types of processing according to the data. As the program, a program that causes a computer to execute at least a part of the operations described in the above-described embodiments is used. For example, the control unit 140 of the base station 10 illustrated in Fig. 18 may be realized by a control program stored in the storage device 1002 and operated by the processor 1001. Furthermore, for example, the control unit 240 of the terminal 20 illustrated in Fig. 19 may be realized by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be mounted by one or more chips. It is noted that the program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), or the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, or the like. The above-described storage medium may be, for example, a database including at least one of the storage device 1002 or the auxiliary storage device 1003, a server, or another appropriate medium.

The communication device 1004 is hardware (a transmission/reception device) for performing communication between computers via at least one of a wired network or a wireless network, and is also referred to as, for example, a network device, a network controller, a network card, a communication module, or the like. The communication device 1004 may be configured with a high-frequency switch, a duplexer, a filter, a frequency synthesizer, and the like in order to implement, for example, at least one of frequency division duplex (FDD) or time division duplex (TDD). For example, a transmission/reception antenna, an amplifier unit, a transmission/reception unit, a transmission/reception path interface, and the like may be realized by the communication device 1004. The transmission/reception unit may be physically or logically separated between the transmitting unit and the reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that executes an output to the outside. It is noted that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured with hardware such as a microprocessor, a digital signal processor (DSP), an application specific integrated circuit (ASIC), a programmable logic device (PLD), or a field programmable gate array (FPGA), and some or all of the functional blocks may be realized by the hardware. For example, the processor 1001 may be mounted using at least one of these pieces of hardware.

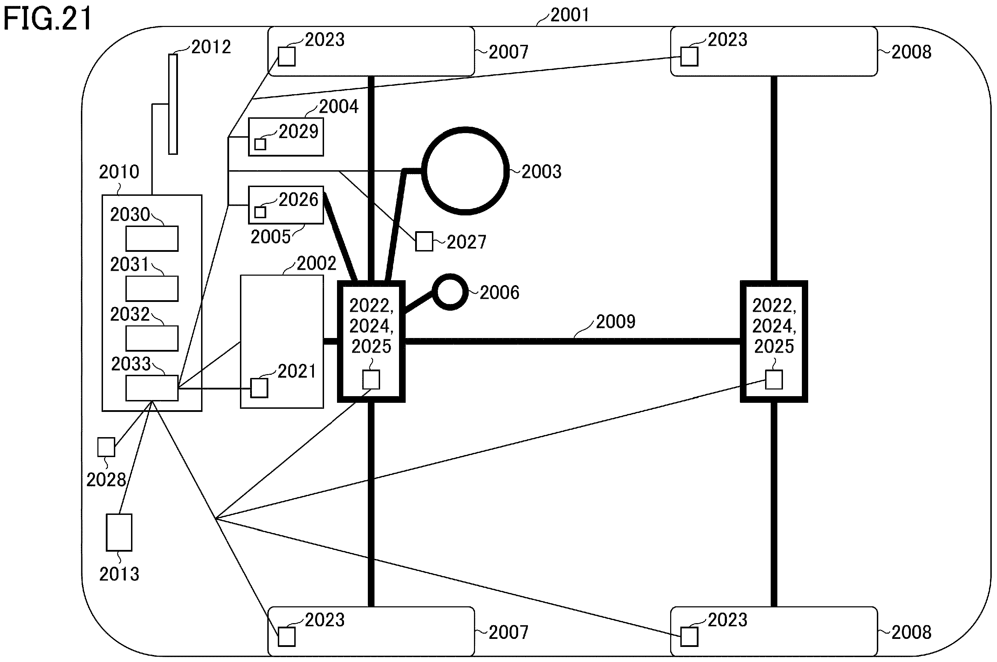

Fig. 21 illustrates a configuration example of a vehicle 2001. As illustrated in Fig. 21, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel or the rear wheel based on an operation of the steering wheel operated by a user.

The electronic control unit 2010 includes a microprocessor 2031, a memory (ROM, RAM) 2032, and a communication port (IO port) 2033. Signals from the various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses a current of a motor, a rotation speed signal of a front wheel and a rear wheel acquired by the rotation speed sensor 2022, an air pressure signal of a front wheel and a rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 includes various devices for providing (outputting) various types of information such as driving information, traffic information, and entertainment information, such as a car navigation system, an audio system, a speaker, a television, and a radio, and one or more ECUs that control these devices. The information service unit 2012 provides various kinds of multi-media information and multi-media services to an occupant in the vehicle 2001 using information acquired from an external device via the communication module 2013 or the like. The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that executes an output to the outside.

A driving assistance system unit 2030 includes various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs for controlling these devices. The driving assistance system unit 2030 also transmits and receives various types of information via the communication module 2013, thereby achieving a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be provided in the inside or outside of the electronic control unit 2010. The external device may be, for example, a base station, a mobile station, or the like.

The communication module 2013 may transmit at least one of the above-described signals from the various sensors 2021 to 2028 input to the electronic control unit 2010, information obtained based on the signals, or information based on an input from the outside (user) obtained via the information service unit 2012 to the external device via wireless communication. The electronic control unit 2010, the various sensors 2021 to 2028, the information service unit 2012, and the like may be referred to as input units that receive inputs. For example, the PUSCH transmitted by the communication module 2013 may include information based on the input.

The communication module 2013 receives various types of information (traffic information, signal information, inter-vehicle information, and the like) transmitted from the external device, and displays the information on the information service unit 2012 provided in the vehicle 2001. The information service unit 2012 may be referred to as an output unit that outputs information (for example, information is output to a device such as a display or a speaker based on a PDSCH (or data/information decoded from the PDSCH) received by the communication module 2013). The communication module 2013 also stores various types of information received from the external devices in the memory 2032 available by the microprocessor 2031. The microprocessor 2031 may control, based on the information stored in the memory 2032, the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001.

### (Summary of Embodiments)

As described above, according to the embodiment of the present invention, there is provided a terminal including: a transmitting unit configured to transmit, to a base station, a capability related to a band to be connected to an antenna that does not switch between bands of a transmission chain; a reception unit configured to receive, from the base station, a notification related to the antenna that does not switch between the bands of the transmission chain; and a control unit configured to determine a transmission antenna port corresponding to the transmission chain, wherein the transmitting unit transmits an uplink by using the transmission chain and the transmission antenna port, and the control unit determines, based on the notification related to the antenna that does not switch between the bands of the transmission chain, the band to be connected to the antenna that does not switch between the bands of the transmission chain.

According to the configuration, the base station 10 and the terminal 20 can perform uplink transmission based on mapping between the Tx chain and the UL transmission port, can determine a band to be transmitted by an antenna that does not switch transmission, and can execute the uplink transmission. That is, in the wireless communication system, it is possible to determine a band for execution of uplink transmission in an antenna that does not perform band switching.

The capability related to the band to be connected to the antenna that does not switch between the bands of the transmission chain may be a capability related to a band connectable to the antenna that does not switch between the bands of the transmission chain. According to the configuration, the base station 10 and the terminal 20 can perform uplink transmission based on mapping between the Tx chain and the UL transmission port, can determine a band to be transmitted by an antenna that does not switch transmission, and can execute the uplink transmission.

The capability related to the band to be connected to the antenna that does not switch between the bands of the transmission chain may be a capability indicating whether each band is connectable to the antenna that does not switch between the bands of the transmission chain. According to the configuration, the base station 10 and the terminal 20 can perform uplink transmission based on mapping between the Tx chain and the UL transmission port, can determine a band to be transmitted by an antenna that does not switch transmission, and can execute the uplink transmission.

The capability related to the band to be connected to the antenna that does not switch between the bands of the transmission chain may be a capability indicating only a band connectable to the antenna that does not switch between the bands of the transmission chain. According to the configuration, the base station 10 and the terminal 20 can perform uplink transmission based on mapping between the Tx chain and the UL transmission port, can determine a band to be transmitted by an antenna that does not switch transmission, and can execute the uplink transmission.

The control unit may determine, based on a preset setting, the antenna that does not switch between the bands of the transmission chain. According to the configuration, the base station 10 and the terminal 20 can perform uplink transmission based on mapping between the Tx chain and the UL transmission port, can determine a band to be transmitted by an antenna that does not switch transmission, and can execute the uplink transmission.

Furthermore, according to an embodiment of the present invention, there is provided a communication method performed by a terminal, the communication method including: a transmission procedure of transmitting, to a base station, a capability related to a band to be connected to an antenna that does not switch between band of a transmission chain; a reception procedure of receiving, from the base station, a notification related to the antenna that does not switch between the bands of the transmission chain; a control procedure of determining a transmission antenna port corresponding to the transmission chain; a procedure of transmitting an uplink by using the transmission chain and the transmission antenna port; and a procedure of determining, based on the notification related to the antenna that does not switch between the bands of the transmission chain, the band to be connected to the antenna that does not switch the band of the transmission chain.

According to the configuration, the base station 10 and the terminal 20 can perform uplink transmission based on mapping between the Tx chain and the UL transmission port, can determine a band to be transmitted by an antenna that does not switch transmission, and can execute the uplink transmission. That is, in the wireless communication system, it is possible to determine a band for execution of uplink transmission in an antenna that does not perform band switching.

### (Supplement to Embodiment)

Although the embodiments of the present invention have been described above, the disclosed invention is not limited to such embodiments, and those skilled in the art will understand various modifications, modifications, alternatives, substitutions, and the like. Although the description has been given using specific numerical examples to facilitate understanding of the invention, these numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. Regarding a processing procedure described in the embodiments, the order of the processing may be changed as long as there is no contradiction. For convenience of processing description, the base station 10 and the terminal 20 have been described using a functional block diagram, but such a device may be realized by hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to the aspects/embodiments described in the present disclosure, and may be performed using other methods. For example, the notification of information may be performed by physical layer signaling (for example, downlink control information (DCI) and uplink control information (UCI)), higher layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system that is extended, modified, generated, and stipulated based thereon. Further, a plurality of systems may be applied in combination (for example, a combination of at least one of LTE or LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or a plurality of network nodes having the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) or a wireless technology (infrared rays, microwaves, and the like), at least one of these wired and wireless technologies is included within the definition of the transmission medium.

The pieces of information, signals, and the like described in the present disclosure may be represented using any one of a variety of different techniques. For example, data, an instruction, a command, information, a signal, a bit, a symbol, a chip, and the like that may be mentioned throughout the above description may be represented by a voltage, a current, an electromagnetic wave, a magnetic field or a particle, an optical field or a photon, or any combination thereof.

It is noted that the terms described in the present disclosure and the terms necessary for understanding the present disclosure may be replaced with terms having the same or similar meanings. For example, at least one of the channel or the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, a radio resource may be indicated by an index.

The names used for the parameters described above are not limited in any respect. Furthermore, mathematical formulas and the like using these parameters may be different from those explicitly disclosed in the present disclosure. Since various channels (for example, PUCCH, PDCCH, and the like) and information elements can be identified by any suitable name, various names assigned to these various channels and information elements are not in any way limitative names.

In the present disclosure, terms such as "base station (BS)", "radio base station", "base station device", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femtocell, a picocell, or the like.

The base station may accommodate one or a plurality of (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station or the base station subsystem that performs a communication service in this coverage.

In the present disclosure, a state indicating that the base station transmits information to the terminal may be replaced with a state indicating that the base station instructs the terminal to perform control and operation based on the information.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable term.

At least one of the base station or the mobile station may be referred to as a transmission device, a reception device, a communication device, or the like. It is noted that at least one of the base station or the mobile station may be a device mounted on a mobile object, the mobile object itself, or the like. The mobile object refers to a movable object, and a moving speed thereof is any moving speed. In addition, a case in which the mobile object is stopped is naturally included. The mobile object includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone (registered trademark), a multi-copter, a quadcopter, a balloon, and objects mounted thereon, and the present invention is not limited thereto. Further, the mobile object may be a mobile object that autonomously travels based on an operation command. The mobile object may be a vehicle (for example, a car, an airplane, or the like), a mobile object that is movable without human intervention (for example, a drone, a self-driving vehicle, or the like), or a robot (manned type or unmanned type). It is noted that at least one of the base station or the mobile station includes a device that does not necessarily move during the communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between a base station and the user terminal is replaced with communication between a plurality of terminals 20 (for example, may be referred to as device-to-device (D2D), vehicle-to-everything (V2X), or the like). In this case, the terminal 20 may have a function of the base station 10 described above. In addition, words such as "upstream" and "downstream" may be replaced with words corresponding to inter-terminal communication (for example, "side"). For example, an uplink channel, a downlink channel, and the like may be replaced with a side channel.

Similarly, the user terminal in the present disclosure may be replaced with the base station. In this case, the base station may have a function of the user terminal described above.

The term "determining" used in the present disclosure may encompass a wide variety of actions. The term "determining" may include, for example, a case in which "judging", "calculating", "computing", "processing", "deriving", "investigating", "looking up, searching, inquiring" (for example, looking up in a table, a database, or another data structure), and "ascertaining" is deemed as "determining". Furthermore, the term "determining" may include a case in which "receiving" (for example, receiving information), "transmitting" (for example, transmitting information), "inputting", "outputting", or "accessing" (for example, accessing data in a memory) is deemed as "determining". In addition, the term "determining" may include a case in which "resolving", "selecting", "choosing", "establishing", "comparing", or the like is deemed as "determining". That is, the "determining" may include a case in which a certain action or operation is deemed as "determining". Further, "determining" may be replaced with "assuming", "expecting", "considering", or the like.

The terms "connected", "coupled", or any variation thereof, mean any direct or indirect connection or coupling between two or more elements, and can include the presence of one or more intermediate elements between two elements that are "connected" to each other or "coupled" to each other. The coupling or connection between the elements may be physical, logical, or a combination thereof. For example, "connection" may be replaced with "access". As used in this disclosure, two elements can be considered to be "connected" or "coupled" to each other using at least one of one or more wires, cables, or printed electrical connections, and as some non-limiting and non-inclusive examples, using electromagnetic energy having wavelengths in a radio frequency domain, a microwave region, and a light (both visible and invisible) region, and the like.

The reference signal may be abbreviated as RS (reference signal), or may be referred to as a pilot according to an applied standard.

As used in this disclosure, the phrase "based on" does not mean "based only on", unless explicitly stated otherwise. In other words, the description "based on" means both "based only on" and "based at least on".

Any reference to elements using designations such as "first" and "second" as used in the present disclosure does not generally limit the amount or order of those elements. These designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, these terms are intended to be inclusive in a manner similar to the term "comprising". Furthermore, the term "or" used in the present disclosure is intended not to be an exclusive OR.

A radio frame may be configured with one or a plurality of frames in a time domain. Each of the one or a plurality of frames in the time domain may be referred to as a sub-frame. The sub-frame may further be configured with one or a plurality of slots in the time domain. The sub-frame may be a fixed time length (for example, 1 ms) that is independent of numerology.

The numerology may be a communication parameter applied to at least one of transmission or reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or a plurality of symbols in the time domain. Further, the mini-slot may be referred to as a sub-slot. The mini-slot may be configured with a smaller number of symbols than the slot. A PDSCH (or PUSCH) transmitted in a time unit larger than the mini-slot may be referred to as a PDSCH (or PUSCH) mapping type A. A PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame or the TTI may be a sub-frame (1 ms) in existing LTE, a period of time shorter than 1 ms (for example, 1 to 13 symbols), or a period of time longer than 1 ms. It is noted that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. It is noted that the definition of the TTI is not limited thereto.

The TTI may be a transmission time unit such as a channel coded data packet (a transport block), a code block, or a code word, or may be a processing unit such as scheduling or link adaptation. It is noted that, when a TTI is given, a time interval (for example, the number of symbols) in which the transport block, the code block, the code word, and the like are actually mapped may be shorter than the TTI.

It is noted that, when one slot or one mini-slot is referred to as the TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI with a time length of 1 ms may be referred to as a general TTI (TTI in LTE Rel.8-12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

It is noted that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and equal to or greater than 1 ms.

The resource block (RB) is a resource allocation unit in the time domain and the frequency domain, and may include one or a plurality of consecutive sub-carriers in the frequency domain. The number of sub-carriers included in the RB may be the same regardless of the numerology, for example, may be 12. The number of sub-carriers included in the RB may be determined based on the numerology.

In addition, the time domain of the RB may include one or a plurality of symbols, and may be a length of one slot, one mini-slot, one sub-frame, or one TTI. Each of one TTI, one sub-frame, and the like may be configured with one or a plurality of resource blocks.

It is noted that one or a plurality of RBs may be referred to as a physical resource block (physical RB, PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as a partial bandwidth or the like) may represent a subset of contiguous common resource blocks (RBs) for a numerology in a carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be configured in one carrier for the UE.

At least one of the configured BWPs may be active, and the UE may not assume that a predetermined signal/channel is transmitted and received outside the active BWPs. It is noted that "cell", "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per sub-frame or radio frame, the number of mini-slots included in the slot, the number of symbols and RBs included in the slot or mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following these articles is a plural form.

In the present disclosure, the term "A and B are different" may mean "A and B are different from each other". It is noted that the term may mean that "A and B are different from C". Terms such as "separated from" and "coupled to" may be interpreted in the same manner as "different".

Each aspect/embodiment described in the present disclosure may be used alone, or may be used in combination, or may be used by being switched with execution. Furthermore, notification of predetermined information (for example, notification of "being X") is not limited to being performed explicitly, and may be performed implicitly (for example, the predetermined information is not notified).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is given for the purpose of illustration and does not have any restrictive meaning to the present disclosure.

### Reference Signs List

- 10: Base station
- 110: Transmitting unit
- 120: Reception unit
- 130: Setting unit
- 140: Control unit
- 20: Terminal
- 210: Transmitting unit
- 220: Reception unit
- 230: Setting unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM, RAM)
- 2033: Communication port (IO port)

## Claims

1. A terminal comprising:
a transmitting unit configured to transmit, to a base station, a capability related to a band to be connected to an antenna that does not switch between bands of a transmission chain;
a reception unit configured to receive, from the base station, a notification related to the antenna that does not switch between the bands of the transmission chain; and
a control unit configured to determine a transmission antenna port corresponding to the transmission chain, wherein
the transmitting unit transmits an uplink by using the transmission chain and the transmission antenna port, and
the control unit determines, based on the notification related to the antenna that does not switch between the bands of the transmission chain, the band to be connected to the antenna that does not switch between the bands of the transmission chain.

2. The terminal according to claim 1, wherein the capability related to the band to be connected to the antenna that does not switch between the bands of the transmission chain is a capability related to a band connectable to the antenna that does not switch between the bands of the transmission chain.

3. The terminal according to claim 2, wherein the capability related to the band to be connected to the antenna that does not switch between the bands of the transmission chain is a capability indicating whether each band is connectable to the antenna that does not switch between the bands of the transmission chain.

4. The terminal according to claim 2, wherein the capability related to the band to be connected to the antenna that does not switch between the bands of the transmission chain is a capability indicating only a band connectable to the antenna that does not switch between the bands of the transmission chain.

5. The terminal according to claim 1, wherein the control unit determines, based on a preset setting, the antenna that does not switch between the bands of the transmission chain.

6. A communication method performed by a terminal, the communication method comprising:
a transmission procedure of transmitting, to a base station, a capability related to a band to be connected to an antenna that does not switch between bands of a transmission chain;
a reception procedure of receiving, from the base station, a notification related to the antenna that does not switch between the bands of the transmission chain;
a control procedure of determining a transmission antenna port corresponding to the transmission chain;
a procedure of transmitting an uplink by using the transmission chain and the transmission antenna port; and
a procedure of determining, based on the notification related to the antenna that does not switch between the bands of the transmission chain, the band to be connected to the antenna that does not switch between the bands of the transmission chain.
